Europäisches Patentamt

European Patent Office

Office européen des brevets

(11) Publication number: **0 052 259**
**B1**

(12) **EUROPEAN PATENT SPECIFICATION**

(45) Date of publication of patent specification: **31.07.85**

(21) Application number: **81108846.7**

(22) Date of filing: **24.10.81**

(51) Int. Cl.⁴: **C 08 F 279/02** // (C08F279/02, 220:42, 212:00, 220:12)

(54) High nitrile resin and process for preparing the same.

(30) Priority: **27.10.80 JP 151289/80**
**28.10.80 JP 151773/80**

(43) Date of publication of application:
**26.05.82 Bulletin 82/21**

(45) Publication of the grant of the patent:
**31.07.85 Bulletin 85/31**

(84) Designated Contracting States:
**BE DE FR GB**

(56) References cited:
**FR-A-2 160 639**
**FR-A-2 214 713**
**GB-A-2 044 782**
**US-A-4 102 947**

**CHEMICAL ABSTRACTS, vol. 91, no. 14, October 1979, page 31, abstract no. 108648k, COLUMBUS OHIO (US)**

**The file contains technical information submitted after the application was filed and not included in this specification**

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Kawamura, Jo**
**No. 6-533, Maikodai 6-chome Tarumi-ku**
**Kobe-shi Hyogo-ken (JP)**
Inventor: **Hashimoto, Yoshihiko**
**No. 1-3-604, Yoshida-cho 1-chome, Hyogo-ku**
**Kobe-shi Hyogo-ken (JP)**
Inventor: **Furukawa, Hiroyasu**
**No. 17-16, Nishihata 1-chome**
**Takasago-shi Hyogo-ken (JP)**

(74) Representative: **Türk, Dietmar, Dr. rer. nat. et al**
**Redies, Redies, Türk & Gille Patentanwälte**
**Brucknerstrasse 20**
**D-4000 Düsseldorf 13 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 052 259

## Description

The present invention relates to a high nitrile resin which has a high content of an ethylenically unsaturated nitrile and moreover is reinforced by a rubber component. More particularly, the invention relates to a product of graft polymerization of a monomer mixture containing an ethylenically unsaturated nitrile in the presence of a rubber, which is a polymer composition having a high impact strength, a good processability and an excellent solvent resistance and which has an ununiform composition such that the content of the ethylenically unsaturated nitrile units in the grafting polymer portion is higher than the content of the ethylenically unsaturated nitrile units in the polymer portion other than the rubber component in the end polymer product, and the content of the ethylenically unsaturated nitrile units in the matrix polymer portion is lower than the content of the ethylenically unsaturated nitrile units in the polymer portion other than the rubber component in the end polymer product.

The so-called nitrile resin having a high content of an ethylenically unsaturated nitrile units is excellent in gas impermeability and solvent resistance, and its practical value is recognized in the fields of wrapping material and industrial material. In particular, it is known that a rubber reinforced copolymer of an ethylenically unsaturated nitrile and an aromatic vinyl compound has a high thermal deformation temperature and the rubber reinforcement further increases the utility of the copolymer. On the other hand, in the preparation of a copolymer of an ethylenically unsaturated nitrile and an aromatic vinyl compound, the both monomers have a large difference in copolymerization reactivity. Therefore, in case of preparing the copolymer by a usual radical polymerization process, the polymer produced in the early stage of the polymerization and the polymer produced in latter stage of the polymerization have different compositions from each other, and the obtained polymer as a whole is not uniform and the impact resistance and thermal stability are lowered. That is to say, when the ethylenically unsaturated nitrile and the aromatic vinyl compound are charged and polymerized in a usual manner, in the early stage of the polymerization the aromatic vinyl compound rich in the reactivity preferentially reacts to produce a copolymer containing the aromatic vinyl compound units in a higher proportion than the proportion of the aromatic vinyl compound in the charged monomer mixture, and in the latter stage of the polymerization a copolymer having a high content of the nitrile units is produced.

There are proposed various processes for preparing a copolymer having a highly uniform composition of an ethylenically unsaturated nitrile and an aromatic vinyl compound or the copolymer reinforced with a rubber. For instance, Japanese Patent Publication No. 33574/1971 discloses a process in which acrylonitrile being the ethylenically unsaturated nitrile compound is copolymerized with an aromatic vinyl compound rich in reactivity in the presence of a diene rubber, while adding the aromatic vinyl compound at such a rate that the reflux temperature is maintained constant. Japanese Patent Publication No. 16347/1973 discloses a process in which the composition of the monomers in the polymerization system is monitored by gas chromatography in parallel with the polymerization, and monomers are added to the system so as to maintain the composition constant, to produce a copolymer having a uniform composition in a yield not so high. Japanese Patent Publication No. 1950/1974 discloses a process in which a high reactive aromatic vinyl compound is added to the polymerization system in accordance with the heat generation of polymerization. In any of these processes, a copolymer having a highly uniform composition is produced by initially charging monomers in a proportion adjusted to produce a copolymer having a desired composition and additionally introducing a part of the monomers to the polymerization system so as to maintain the composition of the monomers in the system constant, while tracing the progress of the polymerization. However, since large amounts of monomers are initially charged in the polymerization system, these processes have defects that the removal of the heat generated is difficult, the degree of the progress of the polymerization must be always traced, additional monomer charge must be controlled in accordance with the degree of the progress, and complication of the polymerization procedures and equipments cannot be avoided for obtaining polymers having a uniform composition. Moreover, the so obtained polymers having a uniform composition are very unsatisfactory in melt flowability, namely processability.

It has now been found that when an ethylenically unsaturated nitrile is copolymerized with an aromatic vinyl compound in the presence of a rubber so that the composition of a grafting polymer portion and the composition of a matrix polymer portion are different from each other, the solvent resistance of nitrile resins can be remarkably increased without impairing the processability and impact resistance.

In accordance with the present invention, there is provided a product of the graft polymerization of monomers consisting of (a) 50 to 85% by weight of an ethylenically unsaturated nitrile, (b) 45 to 5% by weight of an aromatic vinyl compound and (c) 5 to 40% by weight of a member selected from the group consisting of alkyl methacrylates and alkyl acrylates in the presence of 5 to 20 parts by weight of a rubber containing at least 50% by weight of a 1,3-conjugated diene; said product consisting of a matrix polymer and a graft polymer consisting of a rubber portion and a polymer portion grafting on the rubber portion, (A) the grafting polymer portion which consists of the units of the components (a) and (b) or the units of the components (a), (b) and (c) being within the range between not less than 2 parts by weight and less than 40 parts by weight, (B) the matrix polymer portion which consists of the units of the components (a), (b) and (c) being within the range between not less than 40 parts by weight and less than 93 parts by weight, and the following relationship being present between the content, X% by weight, of the ethylenically

2

**0 052 259**

unsaturated nitrile component in the grafting polymer portion (A) and the content, Y% by weight, of the ethylenically unsaturated nitrile component in the matrix polymer portion (B):

$$45 \leqq Y < X \quad \text{and} \quad 60 \leqq X \leqq 85$$

the above all parts by weight being based on 100 parts by weight of the total of said monomers and said rubber.

The term "grafting polymer portion" as used herein means the branching polymer portion that monomers graft-polymerize onto the rubber, and is the portion that the rubber portion used as a trunk polymer is excepted from the acetonitrile-insoluble portion in the product. Also, the term "matrix polymer portion" as used herein means the acetonitrile-soluble portion in the product.

The particularly important point in the present invention is that the content of the unsaturated nitrile in the grafting polymer portion is relatively high. That is to say, it is very important in increasing the solvent resistance that the content of the unsaturated nitrile units in the grafting polymer portion is higher than the content of the unsaturated nitrile units in the polymer portion other than the rubber component in the end product.

The 1,3-conjugated diene-containing rubbers used in the present invention are homopolymers of 1,3-conjugated dienes or copolymers of at least 50% by weight of 1,3-conjugated dienes and vinyl monomers copolymerizable therewith. Examples of the 1,3-conjugated dienes are 1,3-butadiene, isoprene and chloroprene. Examples of the vinyl monomers copolymerizable with 1,3-conjugated dienes are styrene, substituted styrenes, α-methylstyrene, substituted α-methylstyrenes, acrylonitrile, alkyl acrylates and methacrylates having an alkyl group such as methyl, ethyl, propyl or n-butyl group, and the like. These vinyl monomers may be employed alone or in admixture thereof. Also, a polyfunctional monomer such as divinyl benzene, polyethylene glycol dimethacrylate or allyl acrylate may be copolymerized to impart the cross-linking structure to the diene rubbers. One or more kinds of the 1,3-conjugated diene rubbers may be employed in the graft polymerization.

It is necessary that the 1,3-conjugated diene rubber contains at least 50% by weight of the diene units. When the content of the 1,3-conjugated diene units is less than 50% by weight, the glass transition temperature of the rubber is high and the impact resistance of the end product cannot be improved.

The 1,3-conjugated diene rubbers used in the present invention can be prepared by various known processes, e.g. bulk polymerization, solution polymerization, emulsion polymerization and suspension polymerization. Emulsion polymerization is particularly preferred. In that case, the average particle size of the prepared diene rubber latex is preferably from 0.05 to 0.2 μm. from the viewpoint of the impact strength, but is not particularly limited.

The high nitrile resin of the present invention is prepared by polymerizing (a) 50 to 85% by weight, preferably 55 to 80% by weight, of an ethylenically unsaturated nitrile, (b) 45 to 5% by weight of an aromatic vinyl compound and (c) 5 to 40% by weight of an alkyl acrylate and/or an alkyl methacrylate in the presence of a diene polymer prepared previously as mentioned above. Examples of the ethylenically unsaturated nitrile are, for instance, acrylonitrile and methacrylonitrile. The ethylenically unsaturated nitriles may be employed alone or in admixture thereof. Acrylonitrile is preferred. Examples of the aromatic vinyl compound are, for instance, styrene, substituted styrenes, α-methylstyrene and substituted α-methylstyrenes. The aromatic vinyl compounds may be employed alone or in admixture thereof. Styrene is the most representative. Methyl ethyl, propyl and n-butyl acrylates or methacrylates are employed as alkyl acrylates or methacrylates. They may be employed alone or in admixture thereof. Methyl acrylate and methacrylate are the most representative. The use of the alkyl acrylates and/or alkyl methacrylates improves the balance between the melt flowability and the impact resistance of the obtained nitrile resin.

A part of the monomers (b) and (c) other than the ethylenically unsaturated nitrile, namely a part of the aromatic vinyl compound (b) and the alkyl acrylate and/or methacrylate (c), may be replaced with other copolymerizable vinyl compounds, e.g. vinyl esters and vinyl ethers, so long as the use of other copolymerizable vinyl compounds does not impair the physical properties of the end product. In that case, the amount of the replacement is usually at most 30% by weight of the total weight of the aromatic vinyl compound (b) and the alkyl acrylate and/or methacrylate (c).

It is necessary that the grafting polymer portion has the composition that the content X of the ethylenically unsaturated nitrile units is from 60 to 85% by weight and the content of the units of the monomer or monomers other than the unsaturated nitrile is from 40 to 15% by weight. When the content of the unsaturated nitrile units in the grafting polymer portion is less than 60% by weight, the solvent resistance is not improved, and when the content of the unsaturated nitrile units is more than 85% by weight, the processability becomes bad and also since the thermal stability becomes bad, yellow coloration takes place upon molding the end product.

Also, it is necessary that the matrix polymer portion has the following composition. That is to say, the content Y of the ethylenically unsaturated nitrile units in the matrix polymer portion is within the range shown by the equation: $X > Y \geqq 45\%$ by weight, and the content of the units of the monomers other than the unsaturated nitrile is (100–Y)% by weight. When the ethylenically unsaturated nitrile content Y in the matrix polymer portion is less than 45% by weight, the solvent resistance is not improved. When the unsaturated nitrile content Y in the matrix polymer portion is the same as the unsaturated nitrile content X in the

3

# 0 052 259

grafting polymer portion, the processability of the product is bad, and when the nitrile content Y in the matrix polymer portion is higher than the nitrile content X in the grafting polymer portion, the solvent resistance is not improved.

It is desirable that the difference between the ethylenically unsaturated nitrile content X in the grafting polymer portion and the ethylenically unsaturated nitrile content Y in the matrix polymer portion is at least 5% by weight, since the polymer having excellent processability and solvent resistance is obtained.

The polymerization may be carried out with continuously or stepwise altering the composition of the monomers added to the polymerization system, e.g. in such a manner as first adding monomers containing an ethylenically unsaturated nitrile in a large proportion and then adding monomers containing the nitrile in a small proportion.

The proportion of the rubber component in the whole polymer product is from 5 to 20 parts, especially 7 to 15 parts, based on 100 parts by weight of the total of the monomers and the rubber. When the amount of the rubber component is less than 5 parts by weight, the impact resistance is bad. When the amount of the rubber component is extremely large, the gas impermeability and the solvent resistance are bad.

The proportion of the grafting polymer portion is from not less than 2 parts by weight to less than 40 parts by weight, preferably from not less than 3 parts by weight to less than 20 parts by weight, based on 100 parts by weight of the total of the monomers and the rubber. When the grafting polymer portion is less than 2 parts by weight, the solvent resistance is not improved, and when it is not less than 40 parts by weight, the processability is bad. Also, the amount of the grafting polymer portion is from 0.4 to 2 times that of the rubber. The proportion of the matrix polymer portion is from not less than 40 parts by weight to less than 93 parts by weight, preferably from not less than 65 parts by weight to less than 90 parts by weight, based on 100 parts by weight of the total of the monomers and the rubber.

The units other than the unsaturated nitrile units in both of the grafting polymer portion and the matrix polymer portion should be selected so that the compatibility of the graft polymer and the matrix polymer is not impaired, for the purpose of maintaining the impact resistance. For this purpose, it is necessary that the aromatic vinyl compound units are included in both of the grafting polymer portion and the matrix polymer portion.

In the present invention, the polymerization of the monomers in the presence of a 1,3-conjugated diene rubber can be carried out by a known solution, bulk or emulsion polymerization or combination thereof. Emulsion polymerization is industrially advantageous.

In a preferred embodiment, the polymer of the present invention is prepared by an emulsion polymerization as follows: Upon conducting the graft polymerization of 95 to 80 parts by weight of monomers consisting of (a) 50 to 85% by weight, preferably 55 to 80% by weight, of an ethylenically unsaturated nitrile, (b) 45 to 5% by weight of an aromatic vinyl compound and (c) 5 to 40% by weight of an alkyl acrylate and/or an alkyl methacrylate in the presence of 5 to 20 parts by weight, preferably 7 to 15 parts by weight, of a rubber latex as a solid containing at least 50% by weight of a 1,3-conjugated diene, first 15 to 30 parts by weight of the ethylenically unsaturated nitrile, 0 to 5 parts by weight of the aromatic vinyl compound and 0 to 5 parts by weight of the alkyl acrylate and/or methacrylate are added to the rubber latex and the polymerization is then carried out while adding continuously or stepwise the residual monomers to the polymerization system, the above parts by weight being based on 100 parts by weight of the total of the monomers and the solid component of the rubber latex. In this process, it is necessary that 15 to 30 parts by weight of an ethylenically unsaturated nitrile are added to the rubber latex before starting the polymerization. The use of the unsaturated nitrile in an amount of at least 15 parts by weight makes it easy to incorporate 60% by weight or more of the unsaturated nitrile units into the grafting polymer portion. When the amount of the unsaturated nitrile initially added to the rubber latex is more than 30 parts by weight, the content of the unsaturated nitrile units in the grafting polymer portion is apt to exceed 85% by weight. The each amount of the aromatic vinyl compound and the alkyl acrylate and/or methacrylate added initially to the rubber latex is from 0 to 5 parts by weight, preferably 0 to 2 parts by weight. When each amount is more than 5 parts by weight, the content of the ethylenically unsaturated nitrile units is easy to become less than 60% by weight.

The proportion of the ethylenically unsaturated nitrile in the whole monomers to be polymerized is from 50 to 85% by weight. From the viewpoint of the stability of the latex at the time of the polymerization, it is necessary that the proportion of the alkyl acrylate and/or methacrylate in the whole monomers used is from 5 to 40% by weight.

The composition of the monomers added after starting the polymerization, namely the composition of the additionally charged monomers, may be constant. Also, as occasion demands, the composition may be altered with the progress of polymerization. For instance, the composition of monomers added in an early stage of the polymerization and the composition of monomers added in a latter stage may be altered stepwise. In that case, it is preferable that the monomer mixture added in a latter stage of the polymerization contains an alkyl acrylate and/or an alkyl methacrylate.

The graft polymerization is carried out under a usual condition, for instance, at a temperature of 40° to 70°C. for 4 to 10 hours.

From the latex so obtained by the graft polymerization, a polymer product is recovered in a usual manner, e.g. coagulation, washing with water and drying. The thus obtained nitrile resin of the present invention has a high impact resistance and an excellent solvent resistance, and its practical value is very

4

0 052 259

great. The nitrile resin of the invention, to which antioxidants, ultraviolet absorbing agents, stabilizers, lubricants or pigments may be added, as occasion demands, can be molded into desired forms such as blow-molded bottles, biaxially stretched bottles, nonstretched films, uniaxially stretched films, biaxially stretched films, sheets, and the like. Usual molding processes such as injection molding, extrusion, calendering and blow molding are applicable to molding of the nitrile resin of the invention.

The present invention is more specifically explained and described by means of the following Examples, in which all % and parts are by weight. These Examples are intended to illustrate the invention and are not to be construed to limit the scope of the invention.

Examples 1 to 4

(A) Preparation of diene rubber latex

A closable pressure polymerization vessel was charged with the following materials, and after removing oxygen in the vessel, polymerization was carried out at 40°C. for 10 hours with agitation. The polymerization conversion of the monomers was 98%. The particle size of the obtained diene rubber latex measured by an electron microscope was 0.06 μm.

| Components | Amount (part) |
| --- | --- |
| 1,3-Butadiene | 75 |
| Styrene | 25 |
| Triethylene glycol dimethacrylate | 1.2 |
| tert-Dodecylmercaptan | 0.25 |
| Sodium soap of semi-hydrogenated tallow fatty acid | 2.0 |
| Potassium salt of a hydrogenated disportionated rosin | 1.0 |
| Condensed sodium naphthalenesulfonate | 0.2 |
| Disodium ethylenediaminetetraacetate | 0.002 |
| Ferrous sulfate heptahydrate | 0.001 |
| Formaldehyde sodium sulfoxylate | 0.1 |
| p-Menthane hydroperoxide | 0.1 |
| Deionized water | 200 |

(B) Preparation of nitrile resin

A polymerization vessel was charged with the following materials.

| Components | Amount (part) |
| --- | --- |
| Diene rubber latex (as a solid) | 10 |
| Emulsifier (commercial name "GAFAC RD-510Y® made by the General Aniline and Film Corp.) | 1.2 |
| Disodium ethylenediaminetetraacetate | 0.005 |
| Deionized water | 200 |
| Acrylonitrile | 20 |

The content was maintained at 61°C. for 1 hour in a nitrogen stream with agitation. Immediately after adding 0.07 part of potassium persulfate to the vessel, 30 parts of the first monomer mixture shown in Table 1 to which 2.2 parts of n-dodecylmercaptan was added as a molecular weight adjusting agent, was continuously added to the vessel over 2 hours. After 15 minutes from the completion of the addition of the first monomer mixture, 40 parts of the second monomer mixture shown in Table 1 was continuously added to the vessel over 5 hours. After the completion of the addition, the polymerization was further continued

5

**0 052 259**

for 1 hour. Also, potassium persulfate was additionally added in amounts of 0.02 part and 0.03 part after 3 and 5 hours from the starting of the addition of the first monomer mixture, respectively.

After the completion of the polymerization, the obtained latex was cooled to 50°C. or below, coagulated with calcium chloride and heat-treated at a temperature of 80° to 90°C. The obtained white resin powder was washed with water, filtered off and dried.

The dried resin powder was dissolved in acetonitrile to separate into an acetonitrile-soluble matrix polymer portion and a graft polymer consisting of the trunk rubber portion and the grafting polymer portion which is grafted onto the acetonitrile-insoluble trunk rubber. The composition of the matrix polymer portion and the composition of the grafting polymer portion in the graft polymer were measured by elemental analysis.

Further, 0.5 part of di-tert-butylhydroxytoluene was added to 100 part of the resin powder. The mixture was pelletized by an extruder equipped with a vent, and was molded into bars for use in measurement of Izod impact strength by a 0.085 kg (3 oz.) injection molding machine. The Izod impact test was carried out at 23°C. by employing the bars. Also, in order to examine the processability of the nitrile resin, the flow rate of the resin from a nozzle having a diameter of 1 mm. and a length of 10 mm. was measured at 220°C. under loading of 98 bar (100 kg./cm$^2$.) by employing a flow tester of Koka type (made by Shimadzu Corporation) to obtain a flow index.

Also, the solvent resistance was measured by employing dumbbell test pieces (ASTM No. 1) molded by a 0.085. kg (3 oz.) injection molding machine. The test pieces were immersed in xylene at 40°C. for 2 weeks, and change in appearance of the test pieces was observed with the naked eye.

The results are shown in Table 1.

Comparative Examples 1 and 2

The procedure of Example 1 was repeated except that the first and second monomer mixtures shown in Table 1 were employed. The results are shown in Table 1.

As is clear from the physical properties shown in Table 1, the nitrile resin containing the acrylonitrile units in proportions as in Comparative Examples 1 and 2 is inferior in processability shown by flow index or solvent resistance, whereas the nitrile resin of the present invention are excellent in processability and solvent resistance.

6

## TABLE 1

| | Composition of additional charge monomers (%) | | | | | | Conversion of monomers (%) | Proportion of grafting polymer portion (%) |
| | 1st monomer mixture | | | 2nd monomer mixture | | | | |
| | AN*1 | ST*2 | MMA*3 | AN | ST | MMA | | |
|---|---|---|---|---|---|---|---|---|
| Ex. 1 | 57.1 | 25.8 | 17.1 | 57.1 | 21.45 | 21.45 | 93.8 | 8.7 |
| Ex. 2 | 64.3 | 25.0 | 10.7 | 64.3 | 17.85 | 17.85 | 93.6 | 7.0 |
| Ex. 3 | 50.0 | 25.0 | 25.0 | 50.0 | 25.0 | 25.0 | 93.9 | 6.0 |
| Ex. 4 | 57.1 | 42.9 | 0 | 57.1 | 21.45 | 21.45 | 95.1 | 7.5 |
| Com. Ex. 1 | 90.0 | 5.0 | 5.0 | 75.0 | 12.5 | 12.5 | 93.0 | 12.5 |
| Com. Ex. 2 | 20.0 | 40.0 | 40.0 | 35.0 | 32.5 | 32.5 | 94.3 | 8.0 |

(Notes) *1 Acrylonitrile
*2 Styrene
*3 Methyl methacrylate

## TABLE 1 (cont'd)

| | Composition of polymer (%) | | | | | | Physical property of polymer | | |
| | Grafting polymer portion | | | Matrix polymer portion | | | Flow index $(10^{-2}$ ml./sec.) | Izod impact strength $(J/cm^2)$ $(Kg.cm/cm^2)$ | Solvent resistance |
| | AN | ST | MMA | AN | ST | MMA | | | |
|---|---|---|---|---|---|---|---|---|---|
| Ex. 1 | 72.9 | 17.1 | 10.0 | 64.0 | 19.4 | 16.6 | 1.0 | 0.90 (9.2) | no change |
| Ex. 2 | 81.0 | 12.3 | 6.7 | 68.9 | 18.0 | 13.1 | 0.7 | 1.03 (10.5) | no change |
| Ex. 3 | 64.1 | 18.3 | 17.6 | 58.3 | 20.9 | 20.8 | 2.4 | 0.59 (6.0) | no change |
| Ex. 4 | 76.0 | 24.0 | 0 | 63.7 | 24.9 | 11.4 | 0.8 | 0.85 (8.7) | no change |

Examples 5 to 7

A polymerization vessel was charged with the following materials.

| Components | Amount (part) |
|---|---|
| Diene rubber latex obtained in Example 1 (as a solid) | 10 |
| Emulsifier (commercial name "GAFAC RD-510Y® made by the General Aniline and Film Corp.) | 1.2 |
| Disodium ethylenediaminetetraacetate | 0.005 |
| Deionized water | 200 |
| Acrylonitrile | 20 |
| Styrene | 0.6 |
| Methyl methacrylate | 0.4 |

The content was maintained at 61°C. for 1 hour in a nitrogen stream with agitation. Immediately after adding 0.07 part of potassium persulfate to the vessel, 29 parts of the first monomer mixture shown in Table 2 to which 2.2 parts of n-dodecylmercaptan was added, was continuously added to the vessel over 2 hours. After 15 minutes from the completion of the addition of the first monomer mixture, 40 parts of the second monomer mixture shown in Table 2 was continuously added to the vessel over 5 hours. After the completion of the addition, the polymerization was further continued for 1 hour. Also, potassium persulfate was added to the vessel in amounts of 0.02 part and 0.03 part after 3 and 5 hours from the starting of the first monomer mixture, respectively. After the completion of the polymerization, the post-treatment and the measurement were conducted in the same manner as in Example 1.

The results are shown in Table 2.

TABLE 2

| | Composition of additional charge monomers (%) | | | | | | Conversion of monomers (%) | Proportion of grafting polymer portion (%) |
| | 1st monomer mixture | | | 2nd monomer mixture | | | | |
| | AN | ST | MMA | AN | ST | MMA | | |
|-------|------|------|------|------|------|------|------|-----|
| Ex. 5 | 66.5 | 20.0 | 13.5 | 64.3 | 17.9 | 17.8 | 93.5 | 8.3 |
| Ex. 6 | 51.8 | 24.1 | 24.1 | 50.0 | 25.0 | 25.0 | 94.1 | 6.5 |
| Ex. 7 | 59.1 | 40.9 | 0 | 57.2 | 21.4 | 21.4 | 93.0 | 7.8 |

TABLE 2 (cont'd)

| | Composition of polymer (%) | | | | | | Physical property of polymer | | |
| | Grafting polymer portion | | | Matrix polymer portion | | | Flow index $(10^{-2}$ ml./sec.) | Izod impact strength $(J/cm^2)$ $(kg.cm/cm^2)$ | Solvent resistance |
| | AN | ST | MMA | AN | ST | MMA | | | |
|-------|------|------|------|------|------|------|-----|-------------|-----------|
| Ex. 5 | 75.0 | 15.5 | 9.5  | 67.3 | 17.5 | 15.2 | 0.6 | 1.00 (10.2) | no change |
| Ex. 6 | 62.5 | 18.6 | 18.9 | 57.0 | 21.7 | 21.3 | 2.3 | 0.54 (5.5)  | no change |
| Ex. 7 | 73.0 | 22.0 | 5.0  | 63.5 | 25.1 | 11.4 | 0.8 | 0.93 (9.5)  | no change |

Comparative Examples 3 to 5

A polymerization vessel was charged with the following materials.

| Components | Amount (part) |
|---|---|
| Diene rubber latex obtained in Example 1 (as a solid) | 10 |
| Emulsifier (commercial name "GAFAC RE-610"® made by the General Aniline and Film Corp.) | 1.2 |
| Disodium ethylenediamenetetraacetate | 0.005 |
| Deionized water | 200 |
| Acrylonitrile | 8 |

The content was maintained at 61°C. for 1 hour in a nitrogen stream with agitation. Immediately after adding 0.15 part of potassium persulfate to the vessel, 30 parts of the first monomer mixture shown in Table 3 to which n-dodecylmercaptan (n-DM) was added in an amount shown in Table 3, was continuously added to the vessel over 2 hours. Subsequently, 52 parts of the second monomer mixture shown in Table 3 was continuously added to the vessel over 6 hours. The polymerization was further continued for 1 hour. After the completion of the polymerization, the post-treatment and the measurement were conducted in the same manner as in Example 1.

The results are shown in Table 3.

The polymer obtained in Comparative Example 4 had a smell of mercaptan.

TABLE 3

| | Composition of additional charge monomers (%) | | | | | | | |
| | 1st monomer mixture | | | | 2nd monomer mixture | | | Conversion of monomers (%) |
| | AN | ST | MMA | n-DM (part) | AN | ST | MMA | |
| Com. Ex. 3 | 68.3 | 19.0 | 12.7 | 2.2 | 68.3 | 19.0 | 12.7 | 94.0 |
| Com. Ex. 4 | 68.3 | 19.0 | 12.7 | 5.0 | 68.3 | 19.0 | 12.7 | 93.4 |
| Com. Ex. 5 | 54.9 | 26.8 | 18.3 | 2.2 | 54.9 | 26.8 | 18.3 | 94.5 |

TABLE 3 (cont'd)

| | Composition of polymer (%) | | | | | | Physical property of polymer | | |
| | Grafting polymer portion | | | Matrix polymer portion | | | Flow index $(10^{-2}$ ml./sec.) | Izod impact strength $(J/cm^2)$ $(kg.cm/cm^2)$ | Solvent resistance |
| | AN | ST | MMA | AN | ST | MMA | | | |
| Com. Ex. 3 | 69.8 | 18.3 | 11.9 | 70.1 | 18.3 | 11.6 | 0.2 | —* | —* |
| Com. Ex. 4 | 69.8 | 18.4 | 11.8 | 70.0 | 18.2 | 11.8 | 0.8 | 0.34 (3.5) | whitening |
| Com. Ex. 5 | 56.8 | 25.8 | 17.4 | 56.7 | 25.8 | 17.5 | 1.8 | 0.71 (7.2) | whitening |

(Note) * It is impossible to prepare test pieces for measurement due to low flow index.

**0 052 259**

Claims

1. A product of the graft polymerization of monomers consisting of (a) 50 to 85% by weight of an ethylenically unsaturated nitrile, (b) 45 to 5% by weight of an aromatic vinyl compound and (c) 5 to 40% by weight of a member selected from the group consisting of alkyl methacrylates and alkyl acrylates in the presence of 5 to 20 parts by weight of a rubber containing at least 50% by weight of a 1,3-conjugated diene; said product consisting of a matrix polymer and a graft polymer consisting of a rubber portion and a polymer portion grafted on the rubber portion, (A) the grafting polymer portion which consists of the units of the components (a) and (b) or the units of the components (a), (b) and (c) being within the range between not less than 2 parts by weight and less than 40 parts by weight, (B) the matrix polymer portion which consists of the units of the components (a), (b) and (c) being within the range between not less than 40 parts by weight and less than 93 parts by weight, and the following relationship being present between the content, X% by weight, of the ethylenically unsaturated nitrile component in the grafting polymer portion (A) and the content, Y% by weight, of the ethylenically unsaturated nitrile component in the matrix polymer portion (B):

$$45 \leqq Y < X \text{ and } 60 \leqq X \leqq 85$$

said all parts by weight being based on 100 parts by weight of the total of said monomers and said rubber.

2. The product of Claim 1, wherein the ethylenically unsaturated nitrile is acrylonitrile.

3. The product of Claim 1, wherein the aromatic vinyl compound is styrene.

4. The product of Claim 1, wherein the component (c) is methyl methacrylate.

5. A process for preparing nitrile resin which comprises conducting the graft polymerization of 95 to 80 parts by weight of monomers consisting of (a) 50 to 85% by weight of an ethylenically unsaturated nitrile, (b) 45 to 5% by weight of an aromatic vinyl compound and (c) 5 to 40% by weight of a member selected from the group consisting of alkyl acrylates and alkyl methacrylates in the presence of 5 to 20 parts by weight of a rubber containing at least 50% by weight of a 1,3-conjugated diene; 15 to 30 parts by weight of the component (a), 0 to 5 parts by weight of the component (b) and 0 to 5 parts by weight of the component (c) being first added to a polymerization vessel together with said rubber in the form of latex, and the polymerization being carried out while adding continuously or stepwise the residual monomers to the vessel, to give a graft polymer in which (A) a polymer portion grafted on the rubber which consists of the units of the components (a) and (b) or the units of the components (a), (b) and (c) is within the range between not less than 2 parts by weight and less than 40 parts by weight, (B) a matrix polymer portion which consists of the units of the components (a), (b) and (c) is within the range between not less than 40 parts by weight and less than 93 parts by weight, and the following relationship is present between the content, X% by weight, of the ethylenically unsaturated nitrile component in the grafting polymer portion (A) and the content, Y% by weight, of the ethylenically unsaturated nitrile component in the matrix polymer portion (B):

$$45 \leqq Y < X \text{ and } 60 \leqq X \leqq 85$$

said all parts by weight being based on 100 parts by weight of the total of said monomers and said rubber.

**Patentansprüche**

1. Produkt der Pfropfpolymerisation von Monomeren bestehend aus (a) 50 bis 85 Gew.-% eines ethylenisch ungesättigten Nitrils, (b) 45 bis 5 Gew.-% einer aromatischen Vinylverbindung und (c) 5 bis 40 Gew.-% eines Mitglieds ausgewählt aus der Gruppe bestehend aus Alkylmethacrylaten und Alkylacrylaten in Gegenwart von 5 bis 20 Gewichtsteilen eines Gummis enthaltend wenigstens 50 Gew.-% eines 1,3-konjugierten Diens; wobei das Produkt aus einem Matrix-polymeren und einem Pfropfpolymeren, welches aus einem Gummianteil und einem auf den Gummianteil aufgepfropften Polymeranteil besteht, besteht, (A) der aus den Einheiten der Komponenten (a) und (b) oder den Einheiten der Komponenten (a), (b) und (c) bestehende Pfropfpolymeranteil im Bereich von nicht weniger als 2 Gewichtsteilen und weniger als 40 Gewichtsteilen liegt, (B) der aus den Einheiten der Komponenten (a), (b) und (c) bestehende Matrixpolymeranteil im Bereich von nicht weniger als 40 Gewichtsteilen und weniger als 93 Gewichtsteilen liegt und die nachfolgende Beziehung zwischen dem Gehalt, X Gew.-%, an ethylenisch ungesättigter Nitrilkomponente im Pfropfpolymeranteil (A) und dem Gehalt, Y Gew.-%, an ethylenisch ungesättigter Nitrilkomponente im Matrixpolymeranteil (B) besteht:

$$45 \leqq Y < X \text{ und } 60 \leqq X \leqq 85$$

wobei alle Gewichtsteile auf 100 Gewichtsteilen der Summe dieser Monomeren und dieses Gummis beruhen.

2. Produkt nach Anspruch 1, worin das ethylenisch ungesättigte Nitril Acrylnitril ist.

12

**0 052 259**

3. Produkt nach Anspruch 1, worin die aromatische Vinylverbindung Styrol ist.

4. Produkt nach Anspruch 1, worin die Komponente (c) Methylmethacrylat ist.

5. Verfahren zur Herstellung von Nitrilharz, welches umfaßt die Durchführung der Pfropfpolymerisation von 95 bis 80 Gewichtsteilen von Monomeren bestehend aus (a) 50 bis 85 Gew.-% eines ethylenisch ungesättigten Nitrils, (b) 45 bis 5 Gew.-% einer aromatischen Vinylverbindung und (c) 5 bis 40 Gew.-% eines Mitglieds ausgewählt aus der Gruppe bestehend aus Alkylacrylaten und Alkylmethacrylaten in Gegenwart von 5 bis 20 Gewichtsteilen eines Gummis, enthaltend wenigstens 50 Gew.-% eines 1,3-konjugierten Diens; wobei 15 bis 30 Gewichtsteile der Komponente (a), 0 bis 5 Gewichtsteile der Komponente (b) und 0 bis 5 Gewichtsteile der Komponente (c) zuerst zusammen mit dem Gummi in Form eines Latex in ein Polymerisations-gefäß gegeben werden und die Polymerisation durchgeführt wird, während kontinuierlich oder schrittweise die verbleibenden Monomeren in das Gefäß gegeben werden unter Bildung eines Pfropfpolymeren;.in welchem (A) ein auf dem Gummi aufgepfropfter Polymeranteil, welcher aus den Einheiten der Komponenten (a) und (b) oder den Einheiten der Komponenten (a), (b) und (c) besteht, im Bereich von nicht weniger als 2 Gewichtsteilen und weniger als 40 Gewichtsteilen liegt, (B) ein Matrixpolymeranteil, welcher aus den Einheiten der Komponenten (a), (b) und (c) besteht, im Bereich von nicht weniger als 40 Gewichtsteilen und weniger als 93 Gewichtsteilen liegt und die nachfolgende Beziehung zwischen dem Gehalt, X Gew.-%, an ethylenisch ungesättigter Nitrilkomponente im Pfropfpolymeranteil (A) und dem Gehalt, Y Gew.-%, an ethylenisch ungesättigter Nitrilkomponente im Matrixpolymeranteil (B) besteht:

$$45 \leqq Y < X \text{ und } 60 \leqq X \leqq 85$$

wobei alle Gewichtsteile auf 100 Gewichtsteilen der Summe dieser Monomeren und dieses Gummis beruhen.

**Revendications**

1. Produit de polymérisation par greffage des monomères comprenant (a) 50 à 85% pds d'un nitrile à insaturation éthylénique, (b) 45 à 5% pds d'un composé vinylique aromatique et (c) 5 à 40% pds d'un élément choisi dans le groupe comprenant les méthacrylates d'alkyle et les acrylates d'alkyle, en présence de 5 à 20 parties pds d'un caoutchouc renfermant au moins 50% pds d'un 1,3-diène conjugué; ledit produit consistant en un polymère de matrice et un polymère greffé comprenant une portion de caoutchouc et une portion polymère greffée sur la portion de caoutchouc (A) la portion de polymère de greffage qui comprend les motifs des composants (a) et (b) ou les motifs des composants (a), (b) et (c) étant dans l'intervalle entre un minimum de 2 parties en poids et un maximum de 40 parties en poids, (B) la portion de polymère de matrice formée des motifs des composants (a), (b) et (c) étant dans l'intervalle qui n'est pas inférieur à 40 parties pds et qui est inférieur à 93 parties pds, et le rapport suivant étant présent entre la teneur, X% en poids, en composant nitrile à insaturation éthylénique dans la portion de polymère de greffage (A) et la teneur, Y%, en poids du composant nitrile à insaturation éthylénique dans la portion de polymère de matrice (B):

$$45 \leqq Y < X \text{ et } 60 \leqq X \leqq 85$$

toutes les parties ci-dessus étant par rapport au poids de 100 parties du total desdits monomères et dudit caoutchouc.

2. Produit selon la revendication 1, dans lequel le nitrile à insaturation éthylénique est l'acrylonitrile.

3. Produit selon la revendication 1, dans lequel le composé vinylique aromatique est le styrène.

4. Produit selon la revendication 1, dans lequel le composant (c) est le méthacrylate de méthyle.

5. Procédé pour la préparation d'une résine nitrile, qui consiste à effectuer la polymérisation par greffage de 95 à 80 parties en poids de monomères comprenant (a) 50 à 85% pds d'un nitrile à insaturation éthylénique, (b) 45 à 5% pds d'un composé vinylique aromatique et (c) 5 à 40% pds d'un élément choisi dans le groupe comprenant les méthacrylates d'alkyle et les acrylates d'alkyle en présence de 5 à 20 parties pds d'un caoutchouc renfermant au moins 50% pds d'un 1,3-diène conjugué; une proportion de 15 à 30 parties pds du composant (a), 0 à 5 parties pds du composant (b) et 0 à 5 parties pds du composant (c) étant ajoutée en premier lieu au récipient de polymérisation ensemble avec ledit caoutchouc sous forme de latex, et la polymérisation étant effectuée pendant qu'on ajoute continuellement ou par paliers les monomères résiduels au récipient pour donner un polymère greffé dans lequel (A) la portion de polymère de greffage qui comprend les motifs des composants (a) et (b) ou les motifs des composants (a), (b) et (c) étant dans l'intervalle entre un minimum de 2 parties en poids et un maximum de 40 parties en poids, (B) la portion de polymère de matrice formée des motifs des composants (a), (b) et (c) étant dans l'intervalle qui n'est pas inférieur à 40 parties pds et qui est inférieur à 93 parties pds, et le rapport suivant étant présent entre la teneur, X% en poids, en composant nitrile à insaturation éthylénique dans la portion de polymère

**0 052 259**

de greffage (A) et la teneur, Y% en poids, du composant nitrile à insaturation éthylénique dans la portion de polymère de matrice (B):

$$45 \leqq Y < X \quad \text{et} \quad 60 \leqq X \leqq 85$$

toutes les parties ci-dessus étant par rapport au poids de 100 parties du total desdits monomères et dudit caoutchouc.